**Europäisches Patentamt**

**European Patent Office**

**Office européen des brevets**

(11) Veröffentlichungsnummer: **0 316 538**
**A2**

# EUROPÄISCHE PATENTANMELDUNG

(21) Anmeldenummer: **88115287.0**

(22) Anmeldetag: **17.09.88**

(51) Int. Cl.⁴: **H01R 9/05 , H02G 15/08**

(30) Priorität: **29.09.87 DE 3732780**

(43) Veröffentlichungstag der Anmeldung:
**24.05.89 Patentblatt 89/21**

(84) Benannte Vertragsstaaten:
**DE ES FR GB SE**

(71) Anmelder: **Walter Rose GmbH & Co. KG**
**Lütkenheider Strasse 2**
**D-5800 Hagen 1(DE)**

(72) Erfinder: **Heuser, Helmut, Dipl.-Ing.**
**Ringstrasse 37**
**D-5800 Hagen 8(DE)**

(74) Vertreter: **Patentanwälte Meinke und**
**Dabringhaus Dipl.-Ing. J. Meinke Dipl.-Ing. W.**
**Dabringhaus**
**Westenhellweg 67**
**D-4600 Dortmund 1(DE)**

(54) Verfahren und Vorrichtung zum Verbinden von Koaxialkabelenden.

(57) Mit einem Verfahren bzw. einer Vorrichtung zum Verbinden von Koaxialkabeln, insbesondere unter Zuhilfenahme eines mit einer Elektronikplatine versehenen Kabelkastens, mit einem eine Elektronikplatine im Inneren aufweisenden, elektrisch leitenden Kabelkasten mit Kabelanschlußstutzen, mit in den Kabelanschlußstutzen angeordneten Koaxialkabelstücken und mit einer sowohl die Koaxialkabelstücke wenigstens bereichsweise, die Kabelanschlußstutzen und den Kabelkasten umgebenden Kunststoffhülle, soll eine Lösung geschaffen werden, mit der sowohl der Neubau als auch die Reparatur als auch die Erweiterung derartiger Knotenpunkte vereinfacht wird unter Aufrechterhaltung einer großen Dichtigkeit und guten Handhabbarkeit.

Dies wird mit einer Vorrichtung dadurch erreicht, daß die Kunststoffhülle als nach dem Aufbringen, z.B. Aufspritzen, vernetzter Kunststoffmantel ausgebildet ist.

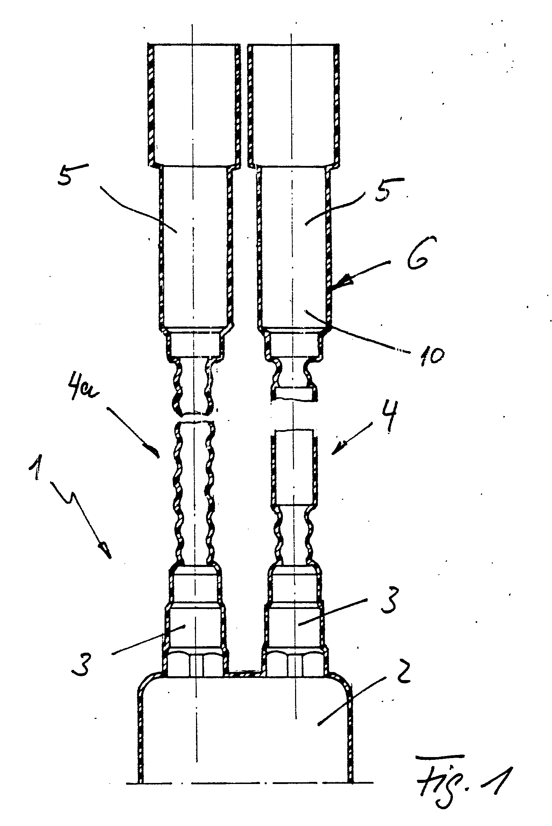

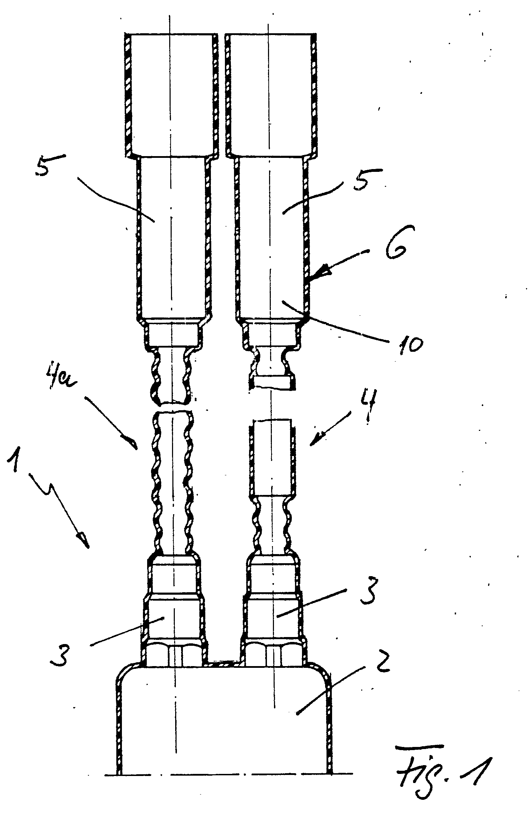

Hierzu zu veröffentlichende Zeichnung: Fig. 1.

Fig. 1

## "Verfahren und Vorrichtung zum Verbinden von Koaxialkabelenden"

Die Erfindung richtet sich auf ein Verfahren und eine Vorrichtung zum Verbinden von Koaxialkabelenden unter Zuhilfenahme eines mit einer Elektronikplatine versehenen Kabelkastens.

Kabelkästen mit Elektronikplatinen und einer Mehrzahl von Kabeleingangsstutzen, die in der Gebrauchslage mit einer Kunststoffhülse oder Kunststoffumhüllung versehen sind, sind in unterschiedlichen Ausführungsvarianten bekannt, wobei hier lediglich als Beispiel auf die DE-OS 30 40 864, DE-OS 31 24 374, DE-OS 31 27 869 und DE-OS 34 36 683 hinzuweisen wäre. Es ist dabei bekannt, die die Elektronik enthaltenen, in der Regel aus Metall bestehenden Kabelkästen feuchtigkeitsdicht und auch soweit wie möglich HF-(hochfrequenz)dicht mit den abgesetzten Koaxialkabelenden zu verbinden. Hier wird die Spritztechnik ebenso eingesetzt wie die Schrumpftechnik.

Es hat sich gezeigt, daß gerade bei Ausbesserungsarbeiten oder Nachrüstarbeiten die bekannten Lösungen noch Nachteile haben. Sie sind entweder vergleichsweise aufwendig was die Herstellung angeht, aufwendig was die Verarbeitung vor Ort an der Baustelle angeht oder auch nicht im genügenden Maße alterungsbeständig, insbesondere wenn es sich um auf gespritzte Kunststoffbeschichtungen handelt.

Aufgabe der Erfindung ist die Schaffung einer Lösung, mit der sowohl der Neubau als auch die Reparatur als auch die Erweiterung derartiger Knotenpunkte vereinfacht wird unter Aufrechterhaltung einer großen Dichtigkeit und guten Handhabbarkeit.

Mit einem Verfahren der eingangs bezeichneten Art wird diese Aufgabe gemäß der Erfindung dadurch gelöst, daß ein aus einem elektrisch leitenden Material bestehender Kabelkasten mit einer Mehrzahl von Kabeleingangsstutzen werkseitig mit einer Elektronikplatine versehen wird, der Kabelkasten geschlossen wird, nachfolgend in die Kabeleingangsstutzen Koaxialkabelpeitschen bzw. Koaxialkabelstücke mit ihren Innen- und Außenleitern entsprechend kontaktiert befestigt werden, wobei zwischen Außenmantel der Kabelstücke und den Kabeleingangsstutzen eine auch feuchtigkeitsdichte und Zugentlastung aufnehmende Verbindung hergestellt wird, wobei die freien Enden der Kabelstücke mit Steckerbuchsen ausgerüstet sind, und daß nachfolgend der Kabelkasten mit Kabeleingangsstutzen und wenigstens Teilbereiche der Koaxialkabelstücke mit einer Kunststoffbeschichtung umgeben werden und daß dann ggf. der Kunststoffmantel mittels eines Elektronenbeschleunigers einer Vernetzungsbehandlung unterworfen wird und daß bei Benutzung des Kabelkastens die Koaxialkabelenden in die Steckerbuchsen der Kabelstücke ein geschoben und mit diesen verbunden werden.

Durch diese Verfahrensweise, von der einige Verfahrensschritte für sich gesehen durch den oben zitierten Stand der Technik bekannt sind, wird eine Vielzahl von Vorteilen erreicht. So können die die Elektronik zum Inhalt habenden Kabelkästen werkseitig bereits vollständig fertiggestellt werden einschließlich der in sämtlichen Kabeleingangsstutzen angeordneten Kabelpeitschen oder Kabelstücken. Werkseitig kann eine völlig dichte Verbindung sowohl was die Hochfrequenzdichtigkeit als auch die Feuchtigkeitsdichtigkeit angeht erreicht werden, eine entsprechende Zugentlastung auf die Koaxialkabelenden kann hergestellt werden u. dgl. mehr. Wird gespritzter Kunststoff eingesetzt oder die Kunststoffumhüllung aufgespritzt, wie dies durch die DE-OS 34 36 683 bekannt geworden ist, so besteht ein weiterer wesentlicher Vorteil der Erfindung in der Aufrechterhaltung und Erzeugung einer hohen Alterungsbeständigkeit, die durch die Strahlenbehandlung des Kunststoffes erreicht wird.

An dieser Stelle sei bemerkt, daß eine Kunststoffumschichtung bis zu den Kupplungsstücken an den Enden der Kabelpeitschen geführt sein kann.

Zur Lösung der oben definierten Aufgabe sieht die Erfindung auch eine Vorrichtung vor, mit einem eine Elektronik platine im Inneren aufweisenden, elektrisch leitenden Kabelkasten mit Kabelanschlußstutzen, mit in den Kabelanschlußstutzen angeordneten Koaxialkabelstücken und mit einer sowohl die Koaxialkabelstücke wenigstens bereichsweise, die Kabelanschlußstutzen und den Kabelkasten umgebenden Kunststoffhülle, die sich dadurch auszeichnet, daß die Kunststoffhülle als nach dem Aufbringen, z.B. Aufspritzen, vernetzter Kunststoffmantel ausgebildet ist.

Dieser vernetzte Kunststoffmantel, der aus mehreren Teilen zusammengesetzt werden kann, wie dies die älteren Offenlegungsschriften zum Teil für den Anschlußkasten mit Kabelanschlußstutzen zeigen, oder der aufgespritzt sein kann, wie dies die DE-OS 34 36 683 offenbart, ist von hoher Beständigkeit, Festigkeit und guter Verarbeitbarkeit. So wie bei dem Verfahren oben beschrieben, liegt der besondere Vorteil darin, daß die Kabelpeitschen zum großen Teil, wenn nicht vollständig, mitummantelt sein können, wobei die gesamte Vorrichtung werkseitig vormontierbar und fertigstellbar ist.

In Ausgestaltung sieht die Erfindung vor, daß der Kunststoffmantel aus einem vernetzbaren Polyurethan gebildet ist, was sich als besonders zweckmäßig herausgestellt hat.

Weitere Ausgestaltungen ergeben sich aus den sonstigen Unteransprüchen. So sieht die Erfindung

zur Erhöhung der Aufhaftung und damit sowohl zur Erzeugung einer feuchtigkeitsdichten Verbindung wie auch einer Verbindung, die Zugkräfte aufnehmen kann, noch vor, daß die Koaxialkabelstücke in ihren Einsteckbereichen in die Koaxialanschlußstutzen als Wellenkabel ausgebildet sind, wobei die Kunststoffumhüllung auch die Wellenbereiche der Koaxialkabelstücke umschließt.

Als Anpassung und Montagemöglichkeit kann vorgesehen sein, die freien Enden der Kabelanschlußstutzen mit in die Wellentäler der Wellenkabel eingebördelten, umlaufenden Bereichen oder wenigstens ein Wellental des in die Kabelanschlußstutzen eingesetzten Koaxialkabelstückes mit einer umlaufenden Ringdichtung zu versehen.

Vorgesehen sein kann auch, daß die zum Wellenkabel hin weisenden Endbereiche der Steckerbuchsen den Koaxialkabelstücken entsprechend der Kabelanschlußstutzen am Kabelkasten ausgebildet sind, d.h. z.B. mit Einbördelungen und/oder Ringdichtungen. Hier ist es zweckmäßig, diese Bereiche sogar identisch auszubilden, d.h. von gleicher innerer und äußeren Gestaltung, so daß auch die einzusteckenden Koaxialkabelstücke bzw. Kabelpeitschen an beiden Enden identisch ausgebildet sein können, d.h. der Absetzbereich, der Abisolierungsbereich, der Wellenbereich und so fort, kann dann gleich gestaltet sein, wobei die Kunststoffumhüllung diese Bereiche einstückig überdeckt.

Die Erfindung ist nachstehend anhand der Zeichnung beispielsweise näher erläutert. Diese zeigt in

Fig. 1 eine Aufsicht auf einen Anschlußbereich mit Kabelkasten, Kabelpeitschen und daran angeordneten Kupplungen,

Fig. 2 eine mögliche andere Ausführungsform der Erfindung sowie in

Fig. 3 und 4 vergrößerte Schnittdarstellungen als Halbschnitt von Kabeleingangsstutzen bzw. Kabelkupplungen vor und nach der endgültigen Befestigung.

Die allgemein mit 1 bezeichnete Vorrichtung zum Verbinden von nicht näher dargestellten Koaxialkabelenden weist insbesondere einen Kabelkasten 2 mit Kabelanschlußstutzen 3 einer nicht näher dargestellten Elektronikplatine und Kabelpeitschen 4 bzw. 4a mit nicht naher im Detail dargestellten Anschlußkupplungen 5 auf.

Alle Elemente, d.h. Kabelkasten 2, Anschlußstutzen 3, Kabelpeitschen 4 und Kupplungen 5, sind im in Fig. 1 dargestellten Beispiel von einer gemeinsamen, nahtlosen Umhüllung 6 mantelartig umgeben, wobei diese Umhüllung 6 nach ihrer Anbringung oder Aufbringung von einem Elektronenbeschleuniger vernetzt worden ist, was naturgemäß in der Figur nicht darstellbar ist.

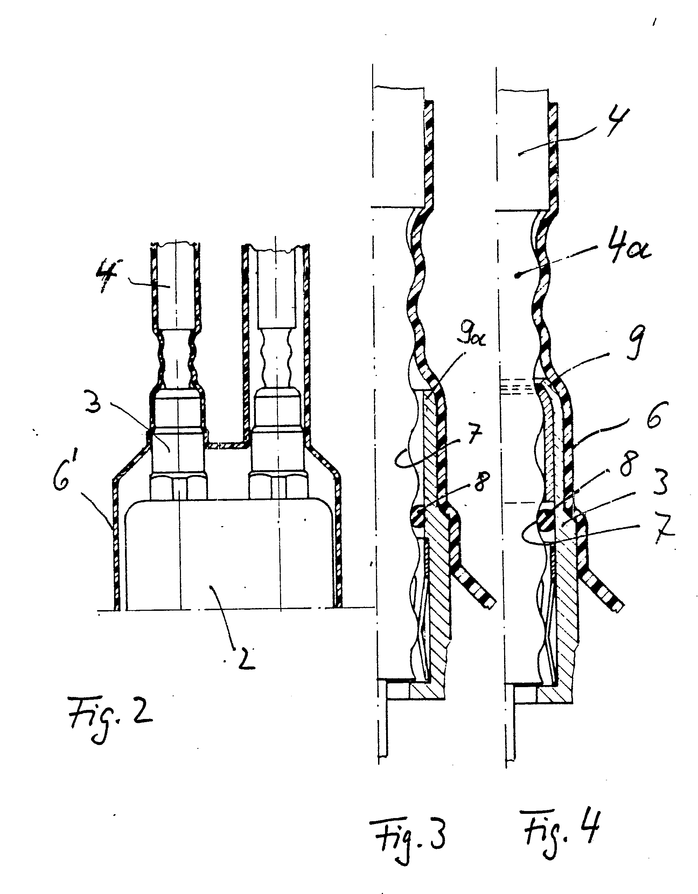

In Fig. 2 ist eine Umhüllung 6' angedeutet, die teilweise als gespritztes Sonderbauteil gefertigt sein kann, etwa wie dies aus der eingangs bezeichneten DE-OS 31 27 869 der Anmelderin bekannt ist. Auch hier ist die Umhüllung 6' bis über die Kabelstücke 5 gezogen, etwa aufgeschrumpft, was in Fig. 2 dargestellt ist (rechts vor und links nach dem Aufschrumpfen).

Auch diese Arbeit kann vollständig werkseitig vorgenommen werden.

In Fig. 3 und 4 ist vergrößert dargestellt, daß wenigstens ein Teil der Kabelstücke 4 als sogenanntes Wellenkabel, mit 4a bezeichnet, ausgebildet ist. Der in Wellenform gestaltete Außenleiter des Koaxialkabels kann dann in vergleichsweise einfacher Weise sowohl zum mechanischen Verkrallen als auch zum zusätzlichen Abdichten herangezogen werden, da in wenigstens einem der Wellentäler 7 im Inneren des Kabeleingangsstutzens 3 eine Ringdichtung 8 eingelegt sein kann, während das vordere freie Ende 9 bzw. 9a werkseitig nach innen gebördelt ausgebildet sein kann, um hier eine Verklemmung zu erreichen, wie dies in Fig. 4 dargestellt ist.

Zweckmäßig kann es sein, wenn die in Fig. 1 mit 10 bezeichneten, zu den Wellenkabeln 4a hin weisenden Einsteckbereiche der Steckerbuchsen 5 völlig gleich mit den Kabelanschlußstutzen 3 am Kabelkasten 2 gestaltet sind, um hier eine völlig gleiche Endgestaltung der Kabelpeitschen 4 bzw. Wellenkabel 4a zu erreichen.

Natürlich ist das beschriebene Ausführungsbeispiel der Erfindung noch in vielfacher Hinsicht abzuändern, ohne den Grundgedanken zu verlassen. Dies gilt insbesondere für die Anzahl, Gestaltung und Anordnung von Kabelstutzen am Gehäuse, das eingesetzte Material u. dgl. mehr.

## Ansprüche

1. Verfahren zur Verbindung von Koaxialkabelenden unter Zuhilfenahme eines mit einer Elektronikplatine versehenen Kabelkastens, dadurch gekennzeichnet, daß ein aus einem elektrisch leitenden Material bestehender Kabelkasten mit einer Mehrzahl von Kabeleingangsstutzen werkseitig mit einer Elektronikplatine versehen wird, der Kabelkasten geschlossen wird, nachfolgend in die Kabeleingangsstutzen Koaxialkabelpeitschen bzw. Koaxialkabelstücke mit ihren Innen- und Außenleitern entsprechend kontaktiert befestigt werden, wobei zwischen Außenmantel der Kabelstücke und den Kabeleingangsstutzen eine auch feuchtigkeitsdichte und Zugentlastung aufnehmende Verbindung hergestellt wird, wobei die freien Enden der Kabelstücke mit Steckerbuchsen ausgerüstet sind, und daß nachfolgend der Kabelkasten mit Kabeleingangsstutzen und wenigstens Teilbereiche der Koaxialkabelstücke mit einer Kunststoffbeschichtung umgeben werden und daß dann ggf. der Kunststoffmantel mittels eines Elektronenbeschleunigers einer Vernetzungsbehandlung unterworfen wird und daß bei Benutzung des Kabelkastens die Koaxialkabelenden in die Steckerbuchsen der Kabelstücke eingeschoben und mit diesen verbunden werden.

2. Vorrichtung zum Verbinden von Koaxialkabeln insbesondere nach Anspruch 1 mit einem eine Elektronikplatine im Inneren aufweisenden, elektrisch leitenden Kabelkasten mit Kabelanschlußstutzen, mit in den Kabelanschlußstutzen angeordneten Koaxialkabelstücken und mit einer sowohl die Koaxialkabelstücke wenigstens bereichsweise, die Kabelanschlußstutzen und den Kabelkasten umgebenden Kunststoffhülle,
dadurch gekennzeichnet,
daß die Kunststoffhülle (6) als nach dem Aufbringen, z.B. Aufspritzen, vernetzter Kunststoffmantel ausgebildet ist.

3. Vorrichtung nach Anspruch 2,
dadurch gekennzeichnet,
daß der Kunststoffmantel (6) aus einem vernetzbaren Polyurethan gebildet ist.

4. Vorrichtung nach Anspruch 2 oder 3,
dadurch gekennzeichnet,
daß die Koaxialkabelstücke (4) an ihren freien Enden mit Einsteckbuchsen ausgerüstet sind, wobei der Kunststoffmantel (6) bis zum freien Ende der Aufsteckbuchsen (5) einstückig aufgespritzt ist.

5. Vorrichtung nach Anspruch 2, 3 oder 4,
dadurch gekennzeichnet,
daß die Koaxialkabelstücke (4) in ihren Einsteckbereichen in die Kabelanschlußstutzen als Wellenkabel ausgebildet sind, wobei die Kunststoffumhüllung auch die Wellenbereiche der Koaxialkabelstücke umschließt.

6. Vorrichtung nach Anspruch 5,
dadurch gekennzeichnet,
daß die freien Enden der Kabelanschlußstutzen (3) mit in die Wellentäler (7) der Wellenkabel (4a) eingebördelten, umlaufenden Bereichen (9) versehen sind.

7. Vorrichtung nach einem der vorangehenden Ansprüche,
dadurch gekennzeichnet,
daß wenigstens ein Wellental (7) des in die Kabelanschlußstutzen (3) eingesteckten Koaxialkabelstückes (4a) mit einer umlaufenden Ringdichtung (8) versehen ist.

8. Vorrichtung nach einem der vorangehenden Ansprüche,
dadurch gekennzeichnet,
daß die zum Wellenkabel (4a) hin weisenden Endbereiche (10) der Steckerbuchsen (5) der Koaxialkabelstücke entsprechend der Kabelanschlußstutzen (3) am Kabelkasten (2) ausgebildet sind.

EP 0 316 538 A2

Fig. 1

Fig. 1

Fig. 2

Fig. 3

Fig. 4